# EUROPEAN PATENT SPECIFICATION

(11) **EP 4 499 395 B1**
(45) Date of publication and mention of the grant of the patent: **20.05.2026**
(21) Application number: 23715486.9
(22) Date of filing: 27.03.2023
(51) Int. Cl.: B29D 11/00

(54) **METHOD OF FABRICATING AT LEAST ONE OPTICAL ELEMENT**
VERFAHREN ZUR HERSTELLUNG MINDESTENS EINES OPTISCHEN ELEMENTS
PROCÉDÉ DE FABRICATION D'AU MOINS UN ÉLÉMENT OPTIQUE

(30) Priority: 28.03.2022 EP 22164747
(43) Date of publication of application: 05.02.2025
(73) Proprietor: trinamiX GmbH, 67063 Ludwigshafen am Rhein (DE)
(72) Inventor: LAUBSCHER, Moritz, 67063 Ludwigshafen am Rhein (DE); ZIMMERMANN, Henning, 67056 Ludwigshafen am Rhein (DE)
(74) Representative: BASF IP Association
(86) International application number: PCT/EP2023/057782
(87) International publication number: WO 2023/186779

(56) References cited:
- WO-A1-2012/046826
- US-A1- 2016 025 932
- US-A1- 2021 394 470

## Description

### Technical Field

The present invention refers to a method of fabricating at least one optical element, to a system for fabricating at least one optical element and to the optical element. The optical element may, in particular, be used for spectrometer devices configured for optical investigation or monitoring of objects, specifically with regard to determining transmissivity, absorption, emission and/or reflectance of objects. Such devices can be employed in various areas of daily life, gaming, traffic technology, mapping of spaces, production technology, security technology, medical technology or in the sciences. However, other fields of application are also feasible.

### Background art

In general, spectrometer devices are known to collect information on the spectral light composition from an object, when irradiating, reflecting and/or absorbing light. Thus, spectrometer devices may comprise several optical components for processing light, such as lenses, filters, gratings, prisms, mirrors, optical waveguides, polarizers or the like. In many applications, spectrometer devices use combinations of two or more of such optical components. As an example, a combination of lenses and filters may frequently be used requiring the assembly of separate elements. The assembly may, generally, comprise a pick-and-place mounting technique. The assembled components may be glued onto each other and mounted onto a bracket or the like.

Thus, in general, the assembly of combined optical components may require multiple processing steps leading to high assembly costs and giving rise to possible manufacturing defects. WO 2012/046826 A1 discloses a black polymerizable composition having an alkali developer resistance, a wafer level lens, and the like. The black polymerizable composition includes at least: a black material; a polymerization initiator; a polymerizable compound; and an alkalisoluble binder polymer having a weight average molecular weight of at least 30,000 and a polymerizable group at a side chain thereof.

US 2021/0394470 A1 discloses method including: providing a substrate, in which a first surface of the substrate includes at least one optical element module region defining an area in which multiple optical elements are to be disposed; forming, for each optical element module region on the first surface of the substrate, a corresponding reflow waste channel in the first surface of the substrate and around a perimeter of the optical element module region; providing a first optical element mold, in which a surface of the first optical element mold includes multiple first cavities, each first cavity defining a shape of a corresponding optical element of the multiple optical elements; providing resin globules between the surface of the optical element mold and the first surface of the substrate; and compressing the first optical element mold to the first surface of the substrate so that the resin fills the multiple first cavities, and so that excess resin flows into the reflow waste channel.

US 2016/0025932 A1 discloses an integrated optical coupling device including a substrate, a coating layer disposed on the substrate, and a prism disposed on the coating layer. The prism may include a first surface and a second surface. The integrated optical coupling device may also include a first lens disposed on the first surface of the prism, a second lens disposed on the second surface of the prism, and an anti-reflection coating layer disposed on the first lens and the second lens.

### Problem to be solved

It is therefore desirable to provide methods and devices which at least partially address above-mentioned technical challenges. Specifically, methods and systems shall be proposed which provide a high volume, scalable and cost-effective process for fabricating optical elements.

### Summary

This problem is addressed by a method of fabricating at least one optical element, by a system for fabricating at least one optical element and by the optical element with the features of the independent claims. Advantageous embodiments are listed in the dependent claims as well as throughout the specification.

In a first aspect of the present invention, a method of fabricating at least one optical element, specifically at least one optical element for a spectrometer device, is disclosed.

The term "spectrometer device" as used herein is a broad term and is to be given its ordinary and customary meaning to a person of ordinary skill in the art and is not to be limited to a special or customized meaning. The term specifically may refer, without limitation, to a device capable of optically analyzing at least one sample, thereby generating at least one item of information on at least one spectral property of the sample. Specifically, the term may refer to a device which is capable of recording a signal intensity with respect to a corresponding wavelength of a spectrum or a partition thereof, such as a wavelength interval, wherein the signal intensity may, preferably, be provided as an electrical signal which may be used for further evaluation. At least one wavelength-selective element, such as an optical filter and/or a dispersive element, may be provided and may be used for separating incident light into a spectrum of constituent wavelength components whose respective intensities are determined by employing at least one detector element. In addition, further optical elements may be used which can be designed for receiving and/or transferring incident light. The one or more elements of the spectrometer device may be accommodated in a housing of the spectrometer device. The spectrometer device, generally, may be operable in a reflective mode and/or may be operable in a transmissive mode.

The term "optical element" as used herein is a broad term and is to be given its ordinary and customary meaning to a person of ordinary skill in the art and is not to be limited to a special or customized meaning. The term specifically may refer, without limitation, to an element or a combination of elements configured for interacting with light in a pre-defined manner. Thus, as an example, the optical element may be or may comprise at least one of: an optical sensing element; an optical emitting element, specifically a light source; a diffractive element, specifically a lens; an optical filter. Other optical elements are feasible.

As used herein, the term "light" may generally refer to a partition of electromagnetic radiation which is, usually, referred to as "optical spectral range" and which specifically comprises one or more of the visible spectral range, the ultraviolet spectral range and the infrared spectral range. The terms "ultraviolet spectral range" or "UV", generally, refer to electromagnetic radiation having a wavelength of 1 nm to 380 nm, preferably of 100 nm to 380 nm. The term "visible spectral range", generally, refers to a wavelength of 380 nm to 760 nm. The terms "infrared spectral range" or "IR", generally, refer to a wavelength of 760 nm to 1000 µm, wherein a wavelength of 760 nm to 3 µm is, usually, denominated as "near infrared spectral range" or "NIR" while the wavelength of 3 µ to 15 µm is, usually, denoted as "mid infrared spectral range" or "MidIR" and the wavelength of 15 µm to 1000 µm as "far infrared spectral range" or "FIR". Thus, when denoting an element as "optical", the element may be configured for interacting with electromagnet radiation in the optical spectral range. The optical element may comprise a combination of multiple elements, wherein each of the elements may be configured for interacting with light in a pre-defined manner. The interaction with light may comprise one or more of refraction, diffraction, scattering, absorption, transmission, reflection, interference or the like. For example, the optical element may comprise a combination of at least one optical filter and at least one optical lens, as will be outlined in further detail below. The optical element may specifically be part of a spectrometer device as defined above.

The term "fabricating" as used herein is a broad term and is to be given its ordinary and customary meaning to a person of ordinary skill in the art and is not to be limited to a special or customized meaning. The term specifically may refer, without limitation, to a process of manufacturing objects. Fabricating may comprise one or more manufacturing steps in which the objects are created and/or produced. Specifically, fabricating may comprise one or more manufacturing steps in which one or more raw material may be transformed into final objects. Thus, in the case of fabricating the optical element, one or more manufacturing steps may be performed in which one or more raw material may be transformed into the optical element. The manufacturing steps may specifically be automated manufacturing steps being performed by or with the help of machines, tools and/or other equipment. Thus, the method of fabricating the optical element may comprise automatically fabricating the optical element, specifically without the need for manual manufacturing steps.

The method comprises the following steps which, as an example, may be performed in the given order. It shall be noted, however, that it is also possible to perform one or more of the method steps once or repeatedly. Further, it is possible to perform two or more of the method steps simultaneously or in a timely overlapping fashion. The method may comprise further method steps which are not listed.

The method comprises:
i. at least one preparation step, wherein the preparation step comprises providing at least one substrate having at least one first surface and at least one second surface, wherein the second surface is located opposite with respect to the first surface;
ii. at least one deposition step, wherein the deposition step comprises applying at least one first layer to the first surface of the substrate, wherein the first layer comprises at least one of an optical filter and an anti-reflection coating; and
iii. at least one molding step, wherein the molding step comprises injection molding at least one optical lens onto the first layer.

The term "preparation step" as used herein is a broad term and is to be given its ordinary and customary meaning to a person of ordinary skill in the art and is not to be limited to a special or customized meaning. The term specifically may refer, without limitation, to a manufacturing step comprising a provision of at least one object. The preparation step may comprise making the object to be provided available for further manufacturing steps. Specifically, in the preparation step, the substrate may be made available for further manufacturing steps. Therein, a commercially available substrate may be provided and/or the substrate or a part thereof may be produced.

The term "substrate" as used herein is a broad term and is to be given its ordinary and customary meaning to a person of ordinary skill in the art and is not to be limited to a special or customized meaning. The term specifically may refer, without limitation, to an arbitrary element configured for carrying one or more other elements disposed thereon or therein. In particular, the substrate may be a planar substrate. The substrate may have an elliptical shape, specifically a circular shape. The substrate specifically may be or may comprise a flat substrate, having two opposing surfaces, wherein the surfaces specifically may be essentially flat and/or wherein the surfaces specifically may be essentially parallel to each other. For example, the substrate may comprise a wafer, such as a wafer made of an insulating or semiconducting material. Alternatively, the substrate may have an elongated shape, such as a rectangular shape, a strip shape or a bar shape. However, other kinds of shapes or even irregular shapes, such as shapes comprising a combination of elliptic and/or rectangular shapes, may also be feasible. The substrate may provide a basis for further manufacturing steps, such as for adding further elements onto the substrate. For example, the substrate may be configured, such as by having appropriate surface properties in terms of roughness, cleanliness, smoothness, surface energy, moisture or the like, for depositing one or more layers onto the substrate.

The substrate specifically may be a transparent substrate. As used herein, the term "transparent" may generally refer to a property of the substrate of at least partially transmitting light in at least one partition of the optical spectral range, such as in one or more of the visible spectral range, the infrared spectral range and/or the ultraviolet spectral range. The transparent substrate may transmit light in at least one partition of the optical spectral range in the amount of at least 50 %, specifically in the amount of at least 70 %, more specifically in the amount of at least 90 %, of an incident light intensity. The transparent substrate may comprise at least one transparent material. The transparent material may be selected from the group consisting of: glass; quartz; silicate; fused silica; soda-lime-silicate; borosilicate; silicon; a transparent conducting oxide, such as aluminum oxide, titanium oxide or indium tin oxide; a transparent organic polymer.

As outlined above, the substrate comprises the at least one first surface and the at least one second surface, wherein the second surface is located opposite with respect to the first surface. The term "surface" as used herein is a broad term and is to be given its ordinary and customary meaning to a person of ordinary skill in the art and is not to be limited to a special or customized meaning. The term specifically may refer, without limitation, to a boundary differentiating between two spatial regions occupied by different matter and/or by matter in different physical states. The surface of the substrate may differentiate between a spatial region forming the substrate itself and a spatial region of its surrounding. Specifically, the surface of the substrate may comprise an interface between the substrate and its surrounding, such as air, vacuum or other matter. The substrate may specifically be a planar substrate and, thus, may essentially have at least two surfaces, specifically the first surface and the second surface. As used in the context of the substrate's surfaces, the terms "first" and "second" are used for the purpose of nomenclature only, without ranking or numbering the surfaces or without giving any preferences. Further, this numbering does not refer to a specific number or order of items. The first surface and the second surface of the substrate may be spaced from each other by a distance of from 100 µm to 1 mm, specifically of from 250 µm to 700 µm. The spacing between the first surface and the second surface may refer to a vertical direction of the substrate, specifically a direction perpendicular to a lateral extension of the substrate's surface.

As further outlined above, the method comprises the at least one deposition step. The term "deposition step" as used herein is a broad term and is to be given its ordinary and customary meaning to a person of ordinary skill in the art and is not to be limited to a special or customized meaning. The term specifically may refer, without limitation, to a manufacturing step comprising an application of at least one layer to an object. In the deposition step, the at least one layer may be applied to the substrate, specifically to at least one of the first surface and the second surface of the substrate. Applying the at least one layer to the substrate may comprise generating the layer on one or more of the first surface and the second surface of the substrate. Specifically, the applying in the deposition step may comprise coating the substrate with the at least one layer.

The term "layer" as used herein is a broad term and is to be given its ordinary and customary meaning to a person of ordinary skill in the art and is not to be limited to a special or customized meaning. The term specifically may refer, without limitation, to an extended body having two sides exhibiting a lateral extension and a thickness by which the two sides are separated from each other, wherein the two sides of the layer may, preferably, be arranged in a parallel fashion with respect to each other. The lateral extension may exceed the thickness of the layer by a factor of at least 10, specifically by a factor of at least 100, more specifically by a factor of at least 1000. The layer may have a thickness of from 1 nm to 100 µm, specifically of from 10 nm to 10 µm, more specifically of from 100 nm to 1 µm. The layer may particularly have a thickness of 100 nm to 1 µm.

As used in the context of the layer, the terms "first" and "second" are used for the purpose of nomenclature only, without ranking or numbering the layers or without giving any preferences. Further, this numbering does not refer to a specific number or order of items. For example, it may be possible to apply one or more first layers and/or to apply one or more second layers. Further, the presence of one or more first layers may not necessarily imply a presence of one or more second layers. The at least one first layer may specifically refer to one or more layers applied to the first surface of the substrate. Similarly, at least one second layer may refer to one or more layers applied to the second surface of the substrate, as will be outlined in further detail below.

As outlined above, the first layer comprises at least one of an optical filter and an anti-reflection coating. For example, the first layer may comprise the at least one optical filter. The term "optical filter" as used herein is a broad term and is to be given its ordinary and customary meaning to a person of ordinary skill in the art and is not to be limited to a special or customized meaning. The term specifically may refer, without limitation, to an optical element configured for attenuating light, specifically in a wavelength-selective fashion, and/or for selectively transmitting light of different wavelengths. Specifically, the optical filter may be configured for transmitting an incident light beam, whereby a spectral composition may be modified upon transmission. For example, the optical filter may be configured for selectively transmitting light in a particular range of wavelengths, while absorbing and/or interfering the remainder. The optical filter may comprise at least one of an optical absorptive filter and an optical interference filter. For possible materials of the optical filter, reference may be made e.g. to WO 2018/077870 A1. Other options, however, are also feasible.

The optical filter may be configured for transmitting only wavelengths above a certain wavelength threshold, also denoted as "long pass filter". The optical filter may be configured for transmitting only wavelength below a certain wavelength threshold, also denoted as "shortpass" filter". The optical filter may be configured for transmitting wavelength only in certain wavelength intervals, also denoted as "band pass filter". However, further optical filters may also be feasible. Specifically, the optical filter may be selected from the group consisting of: a band pass filter; a long pass filter; a short pass filter; a monochromatic filter; a linear variable filter; a polarization filter; a neutral density filter; a band rejection filter.

Alternatively or additionally, the first layer may comprise the at least one anti-reflection coating. The term "anti-reflection coating" as used herein is a broad term and is to be given its ordinary and customary meaning to a person of ordinary skill in the art and is not to be limited to a special or customized meaning. The term specifically may refer, without limitation, to an optical element configured for reducing reflection. Specifically, the anti-reflection coating may be configured for reducing reflection such that a fraction of power of reflected light compared to a total power of incident light is less than 5 %, more specifically less than 1 % or even less than 0.1 %. The anti-reflection coating may be configured for reducing reflection in at least one wavelength range, specifically in at least one wavelength range in the optical spectral range. The anti-reflection coating may have a refractive index which is suitable for reducing reflection. For example, the anti-reflection coating may have a refractive index equal to a square root of the substrate's refractive index. However, other examples of anti-reflection coating, such as multilayer coatings having alternating refractive indices, are also feasible.

The method may further comprise:
iv. applying at least one second layer to the second surface of the substrate, wherein the second layer comprises at least one of an optical filter and an anti-reflection coating.

Specifically, step iv. may be performed after the deposition step. Alternatively or additionally, the second layer may be applied simultaneously or in a timely overlapping fashion to the first layer being applied to the first surface of the substrate in the deposition step. The second layer may comprise the at least one optical filter. The optical filter may comprise at least one of an optical absorptive filter and an optical interference filter. The optical filter may specifically be selected from the group consisting of: a band pass filter; a long pass filter; a short pass filter; a monochromatic filter; a linear variable filter; a polarization filter; a neutral density filter; a band rejection filter. The second layer, specifically the optical filter of the second layer, may be configured similar to the first layer, specifically to the optical filter of the first layer. However, a second layer, specifically the optical filter of the second layer, may also be different from the first layer, specifically from the optical filter of the first layer.

The first layer and the second layer may be configured according to any one of the following options:
- the first layer comprises at least one optical filter, and the second layer comprises at least one anti-reflection coating;
- the first layer comprises at least one optical filter, and the second layer also comprises at least one optical filter;
- the first layer comprises at least one anti-reflection coating, and the second layer comprises at least one optical filter;
- the first layer comprises at least one anti-reflection coating, and the second layer also comprises at least one anti-reflection coating.

As used herein, when referring to the first layer and/or the second layer comprising the optical filter and/or the anti-reflection coating, the first layer and the second layer may consist of the optical filter and/or the anti-reflection coating, respectively. However, as used in this context, the term "comprise" may not exclude the possibility that the first layer and the second layer consist of multiple layers.

The first layer and optionally the second layer may be applied to the first surface and optionally the second surface of the substrate, respectively, by using at least one deposition method. The deposition may take place, e.g., from the liquid phase and/or by using a vacuum deposition process. The deposition method specifically may be selected from the group consisting of: atomic layer deposition; chemical vapor deposition; plasma-enhanced chemical vapor deposition; chemical bath deposition; spin coating; dip coating; physical vapor deposition; molecular beam epitaxy; pulsed laser deposition.

As further outlined above, the method comprises the at least one molding step. The term "molding step" as used herein is a broad term and is to be given its ordinary and customary meaning to a person of ordinary skill in the art and is not to be limited to a special or customized meaning. The term specifically may refer, without limitation, to a manufacturing step comprising shaping at least one liquid or pliable material into at least one object by using at least one mold. The mold may specifically be a rigid and hollow form configured for inserting the liquid or pliable material to be molded. The mold may be configured for being heated and/or pressurized. Thus, the molding step may comprise heating the mold, specifically during injection of the liquid or pliable material into the mold. Further, the molding step may comprise pressurizing the mold when liquid or pliable material is inside the mold in order to shape the object to be molded. The molding step may specifically comprise a sequence of molding sub steps, also denoted as "molding process", as will be outlined in further detail below. The molding step may use a single liquid or pliable material or a composition of liquid or pliable materials for the molding process. The object to be molded may specifically comprise an optical lens.

The term "optical lens" as used herein is a broad term and is to be given its ordinary and customary meaning to a person of ordinary skill in the art and is not to be limited to a special or customized meaning. The term specifically may refer, without limitation, to an optical element configured for focusing or dispersing an incident light beam. The optical lens may be configured for transmitting the incident light beam thereby providing at least one function of focusing or dispersing the incident light beam. The optical lens may be a simple lens made from a single piece and/or a compound lens comprising two or more simple lenses. The optical lens may comprise at least one transparent material, specifically at least one moldable transparent material, as will be outlined in further detail below. The optical lens may be molded onto the first layer in at least one of a concave form, a convex form, a free form and a Fresnel form. The optical lens has a thickness of from 200 µm to 5 mm. The optical lens may have a radius of from 200 µm to 3 mm. The optical lens may further comprise a baseline, for example a baseline due to injection molding. The baseline may have a thickness of from 20 µm to 500 µm.

The molding step may comprise liquefying at least one molding material. The liquefying may comprise heating the molding material in a heating cavity or the like. The molding material may be selected from the group consisting of: a plastic material; a thermoplastic material, specifically polycarbonate, acrylonitrile butadiene styrene and/or poly (methyl methacrylate); a thermoset material, specifically silicone and/or epoxy; a glass material, specifically fused silica.

Further, the molding step may comprise generating at least one mold in between the first layer and the at least one molding tool applied onto the first layer. The molding step comprises introducing the liquefied molding material into the mold, specifically in a pressurized manner. The molding step may further comprise removing the molding tool.

The optical lens may specifically be molded onto the first layer by using at least one of injection molding and transfer molding, specifically film assisted molding. The molding step may specifically comprise at least one molding technique suitable for wafer-level molding.

The molding step comprises a molding process and may comprise a sequence of the following molding sub steps:
- liquefying the at least one molding material;
- generating at least one mold in between the first layer and the at least one molding tool applied onto the first layer;
- introducing the liquefied molding material into the mold, specifically in a pressurized manner;
- removing the molding tool.

However, further molding sub steps in the molding process may also be feasible.

Additionally or alternatively, the molding step may comprise molding at least one further optical lens onto the second layer. The molding of the further optical lens onto the second layer may specifically comprise a similar molding process as described when referring to molding the optical lens onto the first layer.

The molding step may further comprise molding a plurality of optical lenses onto the first layer to obtain a plurality of optical elements. The plurality of optical lenses may be molded in a pattern onto the first layer, for example in a rectangular matrix pattern, in a line pattern or the like. The method may further comprise:
v. at least one separation step, wherein the separation step comprises separating the plurality of optical elements.

The separating of the plurality of optical elements may comprise using at least one separation technique selected from the group consisting of: mechanical dicing, specifically saw dicing; laser dicing, specifically stealth dicing; reactive dicing, specifically plasma dicing; glass cutting, specifically scribe and break.

The method may specifically comprise in the preparation step providing at least one borosilicate wafer as the substrate. The substrate may be coated with one or more first layers and/or one or more second layers in the deposition step. Specifically, a thin film stack may be coated onto the substrates' surfaces. Further, a plurality of optical lenses may be molded in a pattern on top of the coated substrate in the molding step. After the molding step, the method may comprise the separation step comprising separating the plurality of optical lenses from each other by using saw dicing.

In a further aspect of the present invention, a system for fabricating at least one optical element, specifically at least one optical element for a spectrometer device, is disclosed. The term "system" as used herein is a broad term and is to be given its ordinary and customary meaning to a person of ordinary skill in the art and is not to be limited to a special or customized meaning. The term specifically may refer, without limitation, to an arbitrary set of interacting or interdependent components parts forming a whole. Specifically, the components may interact with each other in order to fulfill at least one common function. The at least two components may be handled independently or may be coupled or connectable.

The system comprises:
a. at least one deposition device configured for applying at least one first layer to at least one first surface of at least one substrate, the substrate having the at least one first surface and at least one second surface, wherein the second surface is located opposite with respect to the first surface, wherein the first layer comprises at least one of an optical filter and an anti-reflection coating; and
b. at least one molding device configured for injection molding at least one optical lens onto the first layer.

The term "deposition device" as used herein is a broad term and is to be given its ordinary and customary meaning to a person of ordinary skill in the art and is not to be limited to a special or customized meaning. The term specifically may refer, without limitation, to an arbitrary device configured for performing at least one deposition step as outlined above. Specifically, the deposition device may be configured for performing at least one deposition method. The deposition method may be selected from the group consisting of: atomic layer deposition; chemical vapor deposition; plasma-enhanced chemical vapor deposition; chemical bath deposition; spin coating; dip coating; physical vapor deposition; molecular beam epitaxy; pulsed laser deposition. The deposition device may be configured for applying at least one second layer to the second surface of the substrate. The second layer may comprise at least one of an optical filter and an anti-reflection coating.

The term "molding device" as used herein is a broad term and is to be given its ordinary and customary meaning to a person of ordinary skill in the art and is not to be limited to a special or customized meaning. The term specifically may refer, without limitation, to an arbitrary device configured for performing at least one molding step as outlined above. Specifically, the molding device is configured for performing injection molding.

For further definitions and possible embodiments of the system, reference is made to the description of the method for fabricating at least one optical element as outlined above. The system may specifically be configured for performing the method for fabricating at least one optical element according to the present invention, such as according to any one of the embodiments disclosed above and/or according to any one of the embodiments disclosed in further detail below.

In a further aspect of the present invention, an optical element is disclosed. The optical element comprises at least one substrate having at least one first surface and at least one second surface. The second surface is located opposite with respect to the first surface. The optical element further comprises at least one first layer applied to the first surface of the substrate. The first layer comprises at least one of an optical filter and an anti-reflection coating. The optical element further comprises at least one optical lens molded onto the first layer.

The optical element may specifically be obtainable by the method according to the present invention, such as according to any one of the embodiments disclosed above and/or according to any one of the embodiments disclosed in further detail below. In particular, the optical element obtained by the method of fabricating at least one optical element may comprise no bracket or holder for connecting the optical lens with the first layer, specifically with the optical filter. Further, the optical element obtained by the method of fabricating at least one optical element may comprise no adhesive layer between the optical lens and the first layer, specifically the optical filter. In case of injection molding, the optical element, specifically the optical lens, may comprise a baseline on top of the first layer and below the optical lens due to the molding step.

For definitions and possible embodiments of the optical element, reference is made to the description of the method for fabricating at least one optical element as outlined above.

The method and the system according to the present invention may provide a large number of advantages over known methods and devices. Specifically, with the method and the system according to the present invention, it may be possible to fabricate optical elements comprising two optical components with different functions in one single compound. Additionally, molding, specifically wafer-level molding, may be a high volume process and, thus, may be easily scalable and furthermore a cost effective process. Further, the method and the system according to the present invention may provide means for integrating the optical lens and the first layer, specifically the optical filter, in an optical path and ensuring their correct alignment with respect to each other.

### Short description of the Figures

Further optional features and embodiments will be disclosed in more detail in the subsequent description of embodiments, preferably in conjunction with the dependent claims. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a flow chart of an embodiment of a method of fabricating at least one optical element;
- Figure 2: shows schematic illustrations of different steps of the method of Figure 1;
- Figures 3 to 4D: show embodiments of an optical element in a schematic view; and
- Figure 5: shows an embodiment of a system for fabricating at least one optical element in a schematic view.

### Detailed description of the embodiments

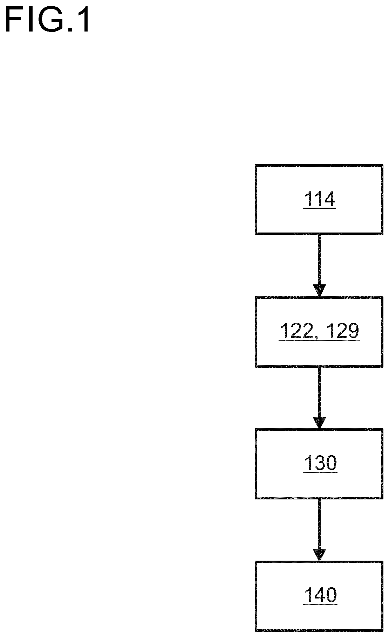

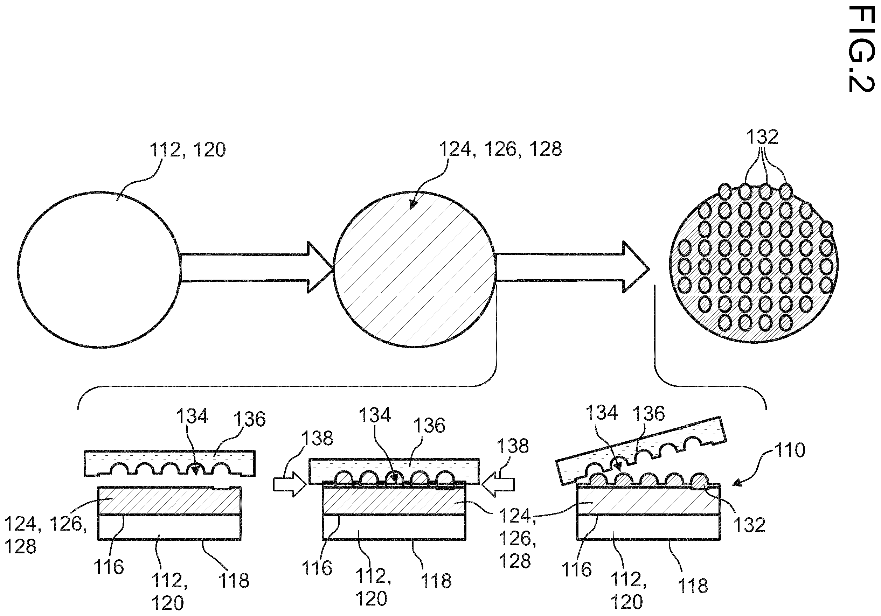

Figure 1 shows a flow chart of an exemplary embodiment of a method for fabricating at least one optical element 110, specifically at least one optical element 110 for a spectrometer device (not shown in the Figures). In Figure 2, different steps of the method shown in Figure 1 are schematically illustrated. Thus, in the following, Figures 1 and 2 are described in conjunction. In the upper part of Figure 2, a substrate 112 is shown in a top view, whereas in the lower part of Figure 2, the substrate 112 is shown in a side view.

The method comprises at least one preparation step (denoted by reference number 114). The preparation step comprises providing the at least one substrate 112 having at least one first surface 116 and at least one second surface 118. The second surface 118 is located opposite with respect to the first surface 116. As shown in Figure 2, the substrate 112 may comprise a wafer 120. The substrate 112 may specifically be a transparent substrate comprising at least one transparent material. For example, the substrate 112 may be a wafer 120 made from borosilicate. However, other transparent materials are also feasible.

The method further comprises at least one deposition step (denoted by reference number 122). The deposition step comprises applying at least one first layer 124 to the first surface 116 of the substrate 112. The first layer 124 comprises at least one of an optical filter 126 and an anti-reflection coating 128. The method may further comprise, specifically at least partially simultaneously to the deposition step, applying at least one second layer 127 to the second surface 118 of the substrate 112 (denoted by reference number 129). The second layer 127 comprises at least one of an optical filter 126 and an anti-reflection coating 128. The first layer 124, and optionally the second layer 127, may be applied to the first surface 116, and optionally the second surface 118 of the substrate 112, respectively, by using at least one deposition method. The deposition method may comprise a thin film deposition technique, such as atomic layer deposition, chemical vapor deposition, plasma-enhanced chemical vapor deposition, chemical bath deposition, spin coating, dip coating, physical vapor deposition, molecular beam epitaxy, pulsed laser deposition or the like.

Further, the method comprises at least one injection molding step (denoted by reference number 130).

The molding step comprises injection molding at least one optical lens 132 onto the first layer 124. Thus, in this example, the optical element 110 may comprise a combination of the optical lens 132 on top of the first layer 124 comprising at least one of the optical filter 126 and the anti-reflection coating 128.

As can be seen in the lower part of Figure 2, the molding step 130 may comprise a sequence of one or more molding sub steps. The molding step may comprise liquefying at least one molding material. The liquefying may comprise heating the molding material in a heating cavity or the like. The molding material may comprise a plastic material, a thermoplastic material and/or a glass material. Further, the molding step may comprise generating at least one mold 134 in between the first layer 124 and at least one molding tool 136 applied onto the first layer 124. The molding step may comprise introducing the liquefied molding material into the mold 134, specifically in a pressurized manner, as indicated by arrows 138 in Figure 2. The molding step may further comprise removing the molding tool 136. The optical lens 132 is molded onto the first layer 124 by using injection molding.

As illustrated in Figure 2, the molding step may comprise molding a plurality of optical lenses 132 onto the first layer 124 to obtain a plurality of optical elements 110. The plurality of optical lenses 132 may be molded in a pattern onto the first layer 124, for example in a rectangular matrix pattern. The method may further comprise at least one separation step (denoted by reference number 140). The separation step may comprise separating the plurality of optical elements 110. The separating of the plurality of optical elements 110 may comprise using at least one separation technique, such as mechanical dicing, laser dicing, reactive dicing, glass cutting or the like.

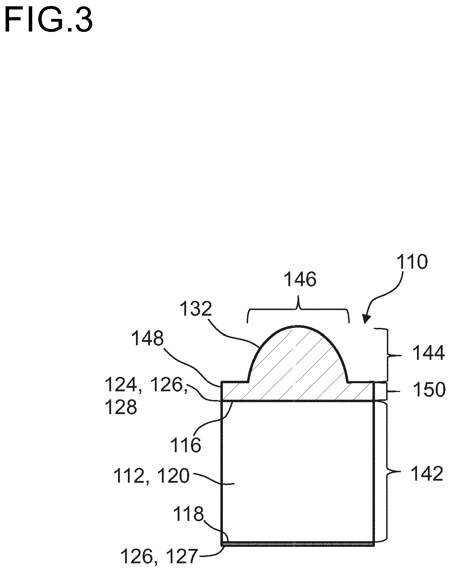

The result of the method as described in Figure 1 can be seen in Figure 3. Therein, an exemplary embodiment of the optical element 110 is shown in a schematic view. In this example, the first layer 124 may comprise the optical filter 126 and/or the anti-reflection coating 128. The second layer 127 may comprise the optical filter 126. The optical filter 126 may comprise at least one of an optical absorptive filter and an optical interference filter. Specifically, the optical filter 126 may comprise a band pass filter. Other optical filters, such as long pass filter, short pass filter, monochromatic filter, linear variable filter, polarization filter, neutral density filter, band rejection filter or the like, are also feasible. Further, also any other combination of the first layer 124 and the second layer 127 comprising at least one of the optical filter 126 and the anti-reflection coating 128 may also be possible.

As shown in Figure 3, the first surface 116 and the second surface 118 of the substrate 112 may be spaced from each other by a distance 142 of from 100 µm to 1 mm, specifically of from 250 µm to 700 µm. The first layer 124 and the second layer 127 may have a thickness of from 1 nm to 100 µm, specifically of from 10 nm to 10 µm, more specifically of from 100 nm to 1 µm.

The optical lens 132 may have a thickness 144 of from 200 µm to 5 mm. The optical lens 132 may have a radius 146 of from 200 µm to 3 mm. The optical lens 132 may further comprise a baseline 148, for example a baseline due to injection molding. The baseline 148 may have a thickness 150 of from 20 µm to 500 µm.

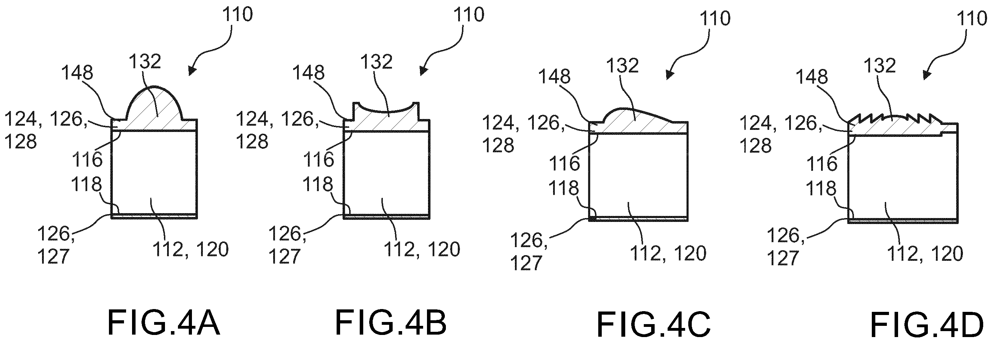

Figures 4A to 4D illustrates further exemplary embodiments of the optical element 110 as fabricated by performing the method shown in Figure 1. The embodiments of the optical element 110 shown in Figures 4A to 4D may widely correspond to the embodiment of the optical element 110 shown in Figures 1 to 3. Thus, for a detailed description of the optical element 110, reference is made to the description of Figures 1 to 3. Further, in the molding step, the optical lens 132 may be molded onto the first layer 124 in a convex form (Figure 4A), in a concave form (Figure 4B), in a free form (Figure 4C) and in a Fresnel form (Figure 4D). However, other moldable forms of the optical lens 132 are also feasible.

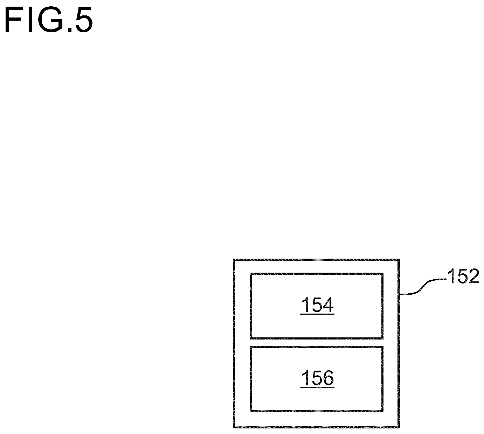

In Figure 5, an exemplary embodiment of a system 152 for fabricating the at least one optical element 110 is shown in a schematic view. The system 152 comprises at least one deposition device 154 configured for applying the at least one first layer 124 to the at least one first surface 116 of the at least one substrate 112. The substrate 112 has the at least one first surface 116 and the at least one second surface 118. The second surface 118 is located opposite with respect to the first surface 116. The first layer 124 comprises at least one of the optical filter 126 and the anti-reflection coating 128. The deposition device 154 may be configured for performing at least one deposition method, specifically at least one deposition method selected from the group consisting of: atomic layer deposition; chemical vapor deposition; plasma-enhanced chemical vapor deposition; chemical bath deposition; spin coating; dip coating; physical vapor deposition; molecular beam epitaxy; pulsed laser deposition. The deposition device 154 may be configured for applying the at least one second layer 127 to the second surface 118 of the substrate 112. The second layer 127 may comprise at least one of the optical filter 126 and the anti-reflection coating 128.

The system 152 further comprises at least one molding device 156 configured for molding the at least one optical lens 132 onto the first layer 124. Specifically, the molding device 156 may be configured for performing at least one of injection molding and transfer molding, specifically film assisted molding.

The system 152 may be configured for performing the method for fabricating at least one optical element 110 according to the present invention, for example according to the exemplary embodiment disclosed in Figure 1 and/or according to any other embodiment disclosed herein. The system 152 may specifically be configured for transferring the substrate 112 having at least the first layer 124 on the first surface 116 from the deposition device 154 to the molding device 156.

### List of reference numbers

- 110: optical element
- 112: substrate
- 114: preparation step
- 116: first surface
- 118: second surface
- 120: wafer
- 122: deposition step
- 124: first layer
- 126: optical filter
- 127: second layer
- 128: anti-reflection coating
- 129: applying at least one second layer
- 130: molding step
- 132: optical lens
- 134: mold
- 136: molding tool
- 138: arrows
- 140: separation step
- 142: distance of the first surface and the second surface
- 144: thickness of the optical lens
- 146: radius of the optical lens
- 148: baseline
- 150: thickness of the baseline
- 152: system
- 154: deposition device
- 156: molding device

## Claims

1. A method of fabricating at least one optical element (110), comprising:
i. at least one preparation step, wherein the preparation step comprises providing at least one substrate (112) having at least one first surface (116) and at least one second surface (118), wherein the second surface (118) is located opposite with respect to the first surface (116);
ii. at least one deposition step, wherein the deposition step comprises applying at least one first layer (124) to the first surface (116) of the substrate (112), wherein the first layer (124) comprises at least one of an optical filter (126) and an anti-reflection coating (128); and
iii. at least one molding step, wherein the molding step comprises molding at least one optical lens (132) onto the first layer (124), wherein the optical lens (132) is molded onto the first layer (124) by using injection molding.

2. The method according to the preceding claim, wherein the substrate (112) is a transparent substrate, wherein the transparent substrate comprises at least one transparent material, wherein the transparent material is selected from the group consisting of: glass; quartz; silicate; fused silica; soda-lime-silicate; borosilicate; silicon; a transparent conducting oxide, such as aluminum oxide, titanium oxide or indium tin oxide; a transparent organic polymer.

3. The method according to any one of the preceding claims, wherein the first layer (124) comprises at least one optical filter (126), wherein the optical filter (126) is selected from the group consisting of: a band pass filter; a long pass filter; a short pass filter; a monochromatic filter; a linear variable filter; a polarization filter; a neutral density filter; a band rejection filter.

4. The method according to any one of the preceding claims, further comprising:
iv. applying at least one second layer (127) to the second surface (118) of the substrate (112), wherein the second layer (127) comprises at least one of an optical filter (126) and an anti-reflection coating (128).

5. The method according to the preceding claim, wherein the first layer (124) and the second layer (127) are configured according to any one of the following options:
- the first layer (124) comprises at least one optical filter (126), and the second layer (127) comprises at least one anti-reflection coating (128);
- the first layer (124) comprises at least one optical filter (126), and the second layer (127) also comprises at least one optical filter (126);
- the first layer (124) comprises at least one anti-reflection coating (128), and the second layer (127) comprises at least one optical filter (126);
- the first layer (124) comprises at least one anti-reflection coating (128), and the second layer (127) also comprises at least one anti-reflection coating (128).

6. The method according to any one of the preceding claims, wherein the first layer (124) and optionally the second layer (127) according to any one of claims 4 and 5 are applied to the first surface (116) and optionally the second surface (118) according to any one of claims 4 and 5 of the substrate (112), respectively, by using at least one deposition method, wherein the deposition method is selected from the group consisting of: atomic layer deposition; chemical vapor deposition; plasma-enhanced chemical vapor deposition; chemical bath deposition; spin coating; dip coating; physical vapor deposition; molecular beam epitaxy; pulsed laser deposition.

7. The method according to any one of the preceding claims, wherein the molding step comprises liquefying at least one molding material, wherein the molding material is selected from the group consisting of: a plastic material; a thermoplastic material; polycarbonate; acrylonitrile butadiene styrene; poly (methyl methacrylate); a thermoset material; silicone; epoxy; a glass material; fused silica.

8. The method according to the preceding claim, wherein the molding step comprises generating at least one mold (134) in between the first layer (124) and at least one molding tool (136) applied onto the first layer (124), wherein the molding step comprises introducing the liquefied molding material into the mold (134).

9. The method according to any one of the preceding claims, wherein the optical lens (132) is molded onto the first layer (124) by using transfer molding.

10. The method according to any one of the preceding claims, wherein the molding step comprises molding a plurality of optical lenses (132) onto the first layer (124) to obtain a plurality of optical elements (110).

11. The method according to the preceding claim, further comprising:
v. at least one separation step, wherein the separation step comprises separating the plurality of optical elements (110), wherein the separating of the plurality of optical elements (110) comprises using at least one separation technique selected from the group consisting of: mechanical dicing; saw dicing; laser dicing; stealth dicing; reactive dicing; plasma dicing; glass cutting; scribe and break.

12. A system (152) for fabricating at least one optical element (110), the system (152) comprising:
a. at least one deposition device (154) configured for applying at least one first layer (124) to at least one first surface (116) of at least one substrate (112), the substrate (112) having the at least one first surface (116) and at least one second surface (118), wherein the second surface (118) is located opposite with respect to the first surface (116), wherein the first layer (124) comprises at least one of an optical filter (126) and an anti-reflection coating (128); and
b. at least one injection molding device (156) configured for molding at least one optical lens (132) onto the first layer (124),
wherein the system (152) is configured for performing the method of fabricating at least one optical element (110) according to any one of the preceding claims.

13. An optical element (110) comprising at least one substrate (112) having at least one first surface (116) and at least one second surface (118), wherein the second surface (118) is located opposite with respect to the first surface (116), further comprising at least one first layer (124) applied to the first surface (116) of the substrate (112), the first layer (124) comprising at least one of an optical filter (126) and an anti-reflection coating (128), the optical element (110) further comprises at least one optical lens (132) injection molded onto the first layer (124), wherein the optical element (110) is obtainable by the method of fabricating at least one optical element (110) according to any one of the preceding claims referring to a method.

## Patentansprüche

1. Eine Methode zur Herstellung von mindestens einem optischen Element (110), bestehend aus:
i. mindestens einen Vorbereitungsschritt, wobei der Vorbereitungsschritt die Bereitstellung von mindestens ein Substrat (112) mit mindestens einer ersten Fläche (116) und mindestens einer zweiten Fläche (118), wobei die zweite Fläche (118) sich gegenüber der ersten Fläche befindet (116);
ii. mindestens einen Ablagerungsschritt, wobei der Ablagerungsschritt die Anwendung von mindestens
eine erste Schicht (124) auf die erste Oberfläche (116) des Substrats (112), wobei die erste Schicht (124) mindestens eine Schicht eines optischen Filters (126) und einer Antireflexbeschichtung (128) umfasst; und
iii. mindestens einen Formschritt, bei dem der Formschritt das Gießen von mindestens einer optischen Linse (132) auf die erste Schicht (124) umfasst, in der die optische Linse (132) geformt wird
auf die erste Schicht (124) durch Spritzgießen.

2. Die Methode gemäß der vorherigen Behauptung, bei der das Substrat (112) ein transparentes Substrat ist
Substrat, wobei das transparente Substrat mindestens ein transparentes Material enthält, wobei das transparente Material aus der Gruppe ausgewählt wird, bestehend aus: Glas; Quarz;
Silikat; verschmolzenes Siliziumdioxid; Soda-Kalk-Silikat; Borosilikat; Silizium; Eine transparente Leitung
Oxid, wie Aluminiumoxid, Titanoxid oder Indiumzinnoxid; Ein transparentes organisches Polymer.

3. Die Methode gemäß einer der vorangegangenen Behauptungen, wobei die erste Schicht (124) besteht aus mindestens einem optischen Filter (126), wobei der optische Filter (126) aus dem Qroup ausgewählt wird, bestehend aus: einem Bandpassfilter; einen LonQ-Passfilter; einen Kurzpassfilter; ein monochromatischer Filter; einen linearen variablen Filter; einen Polarisationsfilter; einen Neutraldichtefilter; Ein Bandabstoßfilter.

4. Die Methode gemäß einer der vorangegangenen Behauptungen umfasst weiter:
iv. Trage mindestens eine zweite Schicht (127) auf die zweite Oberfläche (118) des Substrats (112) auf, wobei die zweite Schicht (127) mindestens eine Schicht eines optischen Filters (126) und einer Antireflexbeschichtung (128) umfasst.

5. Die Methode gemäß der vorherigen Behauptung, wobei die erste Schicht (124) und die zweite Ebene (127) werden gemäß einer der folgenden Q-Optionen konfiQued zugeordnet:
Die erste Schicht (124) besteht aus mindestens einem optischen Filter (126) und der zweiten Schicht (127) besteht aus mindestens einem Antireflex-CoatinQ (128);
Die erste Schicht (124) besteht aus mindestens einem optischen Filter (126) und der zweiten Schicht (127) umfasst außerdem mindestens einen optischen Filter (126);
die erste Schicht (124) besteht aus mindestens einer Antireflexbeschichtung (128), und die zweite Schicht (127) aus mindestens einem optischen Filter (126);
Die erste Schicht (124) besteht aus mindestens einer Antireflexbeschichtung (128), und die zweite Schicht (127) enthält ebenfalls mindestens eine Antireflexbeschichtung (128).

6. Die Methode gemäß einer der vorangegangenen Behauptungen, wobei die erste Schicht (124) und optional wird die zweite Schicht (127) gemäß einer der Ansprüche 4 und 5 auf die erste Fläche (116) angewendet und optional
die zweite Fläche (118) gemäß jedem der Ansprüche 4 bzw. 5 des Substrats (112), indem mindestens eine verwendet wird Abscheidungsmethode, bei der die Ablagerungsmethode aus der Gruppe ausgewählt wird, bestehend aus: Atomschichtablagerung; chemische Dampfabscheidung;
plasmaverstärkte chemische Dampfabscheidung; chemische Ablagerung im Bad; Spin-Beschichtung; Tauchbeschichtung; physikalische Dampfabscheidung;
molekulare Strahlepitaxie; Gepulste Laserabscheidung.

7. Die Methode gemäß einer der vorangegangenen Behauptungen, wobei der Formschritt Beinhaltet die Verflüssigung von mindestens einem Formmaterial, wobei das Formmaterial aus der Gruppe ausgewählt wird, bestehend aus: einem Kunststoffmaterial; ein thermoplastisches Material;
Polycarbonat; Acrylnitril-Butadien-Styrol; Poly (Methylmethacrylat); ein Thermoset-Material; Silikon; Epoxidharz; ein Glasmaterial; Geschmolzenes Siliziumdioxid.

8. Die Methode gemäß der vorherigen Behauptung, bei der der Formschritt umfasst
wodurch mindestens eine Form (134) zwischen der ersten Schicht (124) und mindestens einer entsteht
Formwerkzeug (136) auf die erste Schicht aufgetragen (124), wobei der Formschritt das Einbringen des verflüssigten Formmaterials in die Form beinhaltet (134).

9. Das Verfahren entspricht einer der vorangegangenen Behauptungen, bei der die optische Linse (132) mittels Transferformung auf die erste Schicht (124) geformt wird.

10. Die Methode gemäß einer der vorangegangenen Behauptungen, wobei der Formschritt
Besteht darin, eine Vielzahl optischer Spannungen (132) auf die erste Schicht (124) zu formen, um eine Pluralität optischer Elemente (110) zu erhalten.

11. Die Methode gemäß der vorherigen Behauptung umfasst weiter:
v. mindestens einen Trennschritt, wobei der Trennschritt das Trennen des Pluralität der optischen Elemente (110), wobei die Trennung der Pluralität optischer Elemente (110) die Verwendung von mindestens einer Trenntechnik umfasst, die aus der Gruppe besteht: mechanisches Würfeln; Sägewürfeln; Laserwürfeln; Stealth-Würfeln;
reaktives Würfeln; Plasmawürfeln; Glasschneiden; Schreibe und zerbreche.

12. Ein System (152) zur Herstellung von mindestens einem optischen Element (110), das System (152) umfasst:
a. mindestens ein Depositionsgerät (154), das für das Anlegen von mindestens einer ersten Schicht konfiguriert ist
(124) auf mindestens eine erste Oberfläche (116) von mindestens einem Substrat (112), dem Substrat
(112) mit mindestens einer ersten Fläche (116) und mindestens einer zweiten Fläche (118), wobei die zweite Fläche (118) bezüglich der ersten gegenüber liegt
Oberfläche (116), wobei die erste Schicht (124) mindestens einen Teil eines optischen Filters ausmacht
(126) und eine Antireflexbeschichtung (128); und
b. mindestens eine Injektion
Formgerät (156) konfiguriert für das Formen von mindestens einer optischen Linse (132) auf die erste Schicht (124),
wobei das System (152) so konfiguriert ist, dass mindestens ein optisches Element (110) gemäß einem der vorherigen Ansprüche hergestellt wird.

13. Ein optisches Element (110), das mindestens aus einem Substrat besteht (112), das mindestens einen ersten Teil besitzt Fläche (116) und mindestens eine zweite Fläche (118), wobei die zweite Fläche (118) ist bezüglich der ersten Oberfläche (116) gegenüberliegend, außerdem mindestens eine erste Schicht (124), die auf die erste Oberfläche (116) des Substrats aufgetragen wurde (112), die erste Schicht (124), die mindestens einen optischen Filter (126) und eine Antireflexbeschichtung (128) umfasst, umfasst das optische Element (110) außerdem mindestens eine optische Linse-(132)-Injektion geformt auf die erste Schicht (124), wobei das optische Element (110) mit der Methode von erhalten werden kann. die Herstellung von mindestens einem optischen Element (110) gemäß einer der vorherigen Behauptungen, die sich auf eine Methode beziehen.

## Revendications

1. Une méthode de fabrication d'au moins un élément optique (110), comprenant :
i. au moins une étape de préparation, où l'étape de préparation consiste à fournir à au moins un substrat (112) ayant au moins une première surface (116) et au moins une seconde surface (118), où la seconde surface (118) est située en opposition à la première surface (116) ;
ii. au moins une étape de déposition, où l'étape de dépôt comprend l'application d'au moins une première couche (124) sur la première surface (116) du substrat (112), où la première couche (124) comprend au moins un filtre optique (126) et un revêtement anti-reflet (128) ; et
iii. au moins une étape de moulage, où l'étape consiste à mouler au moins une lentille optique (132) sur la première couche (124), où la lentille optique (132) est moulée
Sur la première couche (124) en utilisant le moulage par injection.

2. La méthode selon l'affirmation précédente, dans laquelle le substrat (112) est transparent substrat, où le substrat transparent comprend au moins un matériau transparent, où le matériau transparent est sélectionné parmi le groupe composé de: verre; quartz;
silicate; silice fusionnée; soda-calcaire-silicate; borosilicate; silicium; une direction transparente oxyde, comme l'oxyde d'aluminium, l'oxyde de titane ou l'oxyde d'indium-étain; un polymère organique transparent.

3. La méthode selon l'une des revendications précédentes, où la première couche (124) comprend au moins un filtre optique (126), dans lequel le filtre optique (126) est sélectionné parmi la consistance Qroup comprenant : un filtre passe-bande ; un filtre passe-LonQ ; un filtre passe-court ; un filtre monochrome ; un filtre à variables linéaires ; un filtre de polarisation ; un filtre à densité neutre ; Un filtre de rejet de groupe.

4. La méthode selon l'une des revendications précédentes, comprenant en outre :
iv. appliquez en Q au moins une seconde couche (127) sur la seconde surface (118) du substrat (112), où la seconde couche (127) comprend au moins un filtre optique (126) et un revêtement anti-reflet (128).

5. La méthode selon l'affirmation précédente, où la première couche (124) et la seconde La couche (127) est confiQuée selon l'une des options suivantes :
La première couche (124) comprend au moins un filtre optique (126), et la seconde couche (127) comprend au moins un enduit antireflet Q (128) ;
La première couche (124) comprend au moins un filtre optique (126), et la seconde couche (127) comprend également au moins un filtre optique (126) ;
la première couche (124) comprend au moins un revêtement antireflet (128), et la seconde couche (127) comprend au moins un filtre optique (126) ;
La première couche (124) comprend au moins un revêtement antireflet (128), et la seconde couche (127) comprend également au moins un revêtement antiréfléchissant (128).

6. La méthode selon l'une des revendications précédentes, où la première couche (124) et optionnellement, la deuxième couche (127), selon l'une des revendications 4 et 5, est appliquée à la première surface (116) et de façon optionnelle la seconde surface (118) selon l'une des revendications 4 et 5 du substrat (112), respectivement, en utilisant au moins une méthode de dépôt, dans laquelle la méthode de dépôt est choisie parmi le groupe composé de: dépôt de couche atomique; dépôt chimique en phase vapeur; dépôt chimique en vapeur amélioré par plasma; dépôt chimique en bain; revêtement de centrifugation; revêtement trempé; dépôt physique en vapeur; épitaxie à faisceau moléculaire; Déposement laser pulsé.

7. La méthode selon l'une des revendications précédentes, dans laquelle l'étape de moulage comprend la liquéfaction d'au moins un matériau de moule, dans lequel le matériau de moulage est sélectionné parmi le groupe composé de: un matériau plastique; un matériau thermoplastique;
polycarbonate; acrylonitrile butadiène styrène; poly (méthacrylate de méthyle); un matériau thermodurci; silicone; époxy; un matériau en verre; Silice fusionnée.

8. La méthode selon l'affirmation précédente, où l'étape de moulage comprend générant au moins un moule (134) entre la première couche (124) et au moins une Outil de moulage (136) appliqué sur la première couche (124), où l'étape de moulage consiste à introduire le matériau de moulage liquéfié dans le moule (134).

9. La méthode selon l'une des revendications précédentes, consiste à mouler la lentille optique (132) sur la première couche (124) à l'aide d'un moulage par transfert.

10. La méthode selon l'une des revendications précédentes, dans laquelle l'étape de moulage consiste à mouler une pluralité de temps optiques (132) sur la première couche (124) pour obtenir une pluralité d'éléments optiques (110).

11. La méthode selon l'affirmation précédente, comprenant en outre :
v. au moins une étape de séparation, où l'étape de séparation comprend la séparation de la pluralité des éléments optiques (110), où la séparation de la pluralité des éléments optiques (110) comprend l'utilisation d'au moins une technique de séparation sélectionnée parmi le groupe comprenant: découpage mécanique; saw en découpant; découpage au laser; découpage furtif;
découpage réactif; découpage plasma; découpe du verre; Scribe et casse.

12. Un système (152) pour fabriquer au moins un élément optique (110), le système (152) comprenant :
a. au moins un dispositif de dépôt (154) configuré pour appliquer au moins une première couche (124) à au moins une première surface (116) d'au moins un substrat (112), le substrat
(112) ayant au moins une première surface (116) et au moins une seconde surface (118), où la seconde surface (118) est située en opposition à la première surface (116), où la première couche (124) comprend au moins une partie d'un filtre optique
(126) et un revêtement antireflet (128) ; et
b. au moins une injection
Dispositif de moulage (156) configuré pour mouler au moins une lentille optique (132) sur la première couche (124),
où le système (152) est configuré pour effectuer la méthode de fabrication d'au moins un élément optique (110) selon l'une des revendications précédentes.

13. Un élément optique (110) comprenant au moins un substrat (112) ayant au moins un premier surface (116) et au moins une seconde surface (118), où la seconde surface (118) est située en opposition par rapport à la première surface (116), comprenant en outre au moins une première couche (124) appliquée sur la première surface (116) du substrat (112), la première couche (124) comprenant au moins un filtre optique (126) et un revêtement antireflet (128), l'élément optique (110) comprend en outre au moins une injection de lentille optique (132) moulé sur le première couche (124), où l'élément optique (110) est obtenable par la méthode de fabriquer au moins un élément optique (110) selon l'une des revendications précédentes faisant référence à une méthode.
